# FASCICULE DE BREVET EUROPEEN

(11) **EP 3 471 346 B1**
(45) Date de publication et mention de la délivrance du brevet: **23.11.2022**
(21) Numéro de dépôt: 18198968.2
(22) Date de dépôt: 05.10.2018
(51) Int. Cl.: H04L 43/0817, H04L 41/12, H04L 49/15

(54) **PROCEDE DE GENERATION DE REQUETES POUR LA SEGMENTATION DE LA SURVEILLANCE D'UN RESEAU D'INTERCONNEXION ET MATERIEL ASSOCIE**
VERFAHREN ZUR ERZEUGUNG VON ANFRAGEN FÜR DIE SEGMENTIERUNG DER ÜBERWACHUNG EINES VERBINDUNGSNETZES, UND ENTSPRECHENDES MATERIAL
METHOD FOR GENERATION OF REQUESTS FOR THE SEGMENTATION OF MONITORING OF AN INTERCONNECTION NETWORK AND ASSOCIATED EQUIPMENT

(30) Priorité: 10.10.2017 FR 1759486
(43) Date de publication de la demande: 17.04.2019
(73) Titulaire: BULL SAS, 78340 Les Clayes-sous-Bois (FR)
(72) Inventeur: FICET, Jean-Vincent, 73110 La Chapelle Blanche (FR); DUGUE, Sébastien, 38119 SAINT THEOFFREY (FR); SCHIMARA, Marek, 38470 Vinay (FR)
(74) Mandataire: Argyma

(56) Documents cités:
- US-A1- 2003 033 427
- US-A1- 2006 227 770
- US-B1- 6 393 483

## Description

L'invention concerne le domaine de la surveillance de réseau et plus particulièrement de la génération de requêtes informatiques pouvant être utilisées notamment dans la surveillance des équipements d'un réseau d'interconnexion. L'invention propose un procédé de génération de requêtes, le dispositif permettant la génération de telles requêtes, un système de surveillance intégrant ce dispositif ainsi qu'un procédé de surveillance mettant en œuvre ce système. Des dispositifs ou procédés similaires sont connus des documents US2006/227770 et US6393483.

### [Art antérieur]

Le calcul haute performance, aussi appelé HPC (High Performance Computing en terminologie anglo-saxonne) se développe pour la recherche universitaire comme pour l'industrie, notamment dans des domaines techniques tels que l'aéronautique, l'énergie, la climatologie et les sciences de la vie. Ces calculs sont généralement mis en œuvre sur des réseaux d'interconnexion appelés clusters. L'objectif de ces clusters est de dépasser les limites du matériel existant en mutualisant des ressources pour permettre l'exécution parallélisée d'instructions et l'agrégation de capacité mémoire et de disque.

Un cluster, aussi appelé réseau d'interconnexion, est un ensemble de moyens de calcul (aussi appelés nœuds) interconnectés pouvant réaliser des opérations communes. Les clusters sont constitués d'un grand nombre de nœuds (typiquement plusieurs milliers), ces derniers étant interconnectés, par exemple de façon hiérarchique, par des commutateurs (typiquement plusieurs centaines), appelés *switch* en terminologie anglo-saxonne. Les réseaux ainsi constitués peuvent comprendre plusieurs dizaines milliers de ports. Chaque nœud est par exemple un serveur, un ordinateur ou plus généralement une machine.

La taille des clusters augmente de jour en jour. Afin de permettre le contrôle et la maintenance en condition opérationnelle des clusters de calcul, les logiciels de gestion réseau doivent donc non seulement pouvoir traiter de gros volumes de données, mais aussi pouvoir remp1onter les anomalies rapidement. Ainsi, la surveillance et le contrôle d'un cluster, en particulier des commutateurs, sont typiquement réalisés de façon centralisée par un nœud dédié, appelé nœud d'administration. Un gestionnaire réseau (aussi appelé « Subnet Manager ») peut surveiller via ce nœud d'administration le réseau. Le gestionnaire réseau peut en outre utiliser des agents de gestion de sous-réseau (SMA - Subnet management agent en terminologie anglo-saxonne) associé à chaque commutateur. Les SMA communiquent des changements, tels que les nouvelles connexions, les déconnexions et la modification de l'état du port au gestionnaire réseau (cf. « Infiniband^{™} Architecture Volume 1 Release 1.3 »). En outre, une défaillance matérielle dans un des commutateurs ou des nœuds ayant une influence directe sur les performances d'un cluster, il est également nécessaire de surveiller l'état de fonctionnement du matériel dans un cluster pour, le cas échéant, alerter un administrateur d'un problème potentiel de matériel.

Néanmoins, une telle surveillance de cluster, et notamment des défaillances matérielles, nécessite la manipulation de gros volumes de données générés par des milliers de nœud et de commutateurs. Une possibilité pour réduire la consommation des ressources tout en proposant une surveillance plus performante est de diviser le réseau en plusieurs ensembles disjoints, chacun de ceux-ci étant surveillé par une entité logicielle dédiée. Ainsi, il existe des procédés pour la segmentation (ou découvertes partielles), d'un réseau d'interconnexion. Ainsi, de façon à subdiviser les réseaux, les gestionnaires réseau peuvent utiliser des tables de routage calculées au moment de l'initialisation du réseau. Ces tables peuvent comporter des identifiants de type LID (Local Identifier en terminologie anglo-saxonne) mais dans ce cas tous les ports d'un même commutateur partagent le même LID ou des identifiants de type GID (Global Identifier en terminologie anglo-saxonne) composé d'un préfix et d'un identifiant de port GUID (Global unique identifiers en terminologie anglo-saxonne). Afin d'assurer des performances optimales, les tables de routages doivent être recalculées chaque fois que la topologie change ou que des défaillances importantes surviennent. Une autre solution est de mettre en place des clés de gestion unique de type PKey (Partition Key). Néanmoins, les différents ports de deux partitions ne sont pas en capacité de travailler ensemble sur une même problématique. Ainsi, les solutions existantes entrainent une réduction de l'envergure du réseau d'interconnexion ou nécessitent l'utilisation de tables de routage.

Dans les clusters (et notamment les systèmes Infiniband ou Omnipath, Infiniband et OmniPath sont aussi des marques), les indications définissant un chemin entre un équipement donné et un équipement de référence portent le nom de chemin de routes directes (Direct Route path en terminologie anglo-saxonne). L'équipement de référence est typiquement un nœud d'administration. Selon la topologie de l'infrastructure informatique, il peut y avoir plusieurs chemins de routes directes entre un équipement donné et un équipement de référence. En d'autres termes, un chemin de routes directes décrit les liens successifs qu'un paquet de donnée émis par l'équipement de référence doit utiliser pour atteindre un équipement donné. Il s'exprime en une suite de références de port de sortie de commutateurs que le paquet doit utiliser pour atteindre sa destination. Les chemins de routes directes entre un équipement de référence et d'autres équipements sont généralement établis lors de la découverte de l'infrastructure élémentaire par le gestionnaire réseau. Une telle découverte utilise généralement des algorithmes classiques d'exploration d'arbres. Néanmoins, l'utilisation d'un ensemble de chemin de routes directes pour cibler un ensemble de ports serait un travail fastidieux consommant un temps important car la définition d'un ensemble de ports pourrait nécessiter des milliers de lignes de commande de type routes directes.

Ainsi, il existe un besoin pour de nouveaux procédés capables de rapidement créer des sous-ensembles de réseau d'interconnexion non disjoints et pouvant être surveillés par des unités distinctes sans redondance de façon à permettre la surveillance rapide de gros volumes de données.

### [Problème technique]

L'invention a donc pour but de remédier aux inconvénients de l'art antérieur. En particulier, l'invention a pour but de proposer un procédé et un dispositif de génération d'une requête capables de rapidement subdiviser un réseau d'interconnexion en plusieurs ensembles de ports, correspondant à des portions du réseau d'interconnexion, de façon à pouvoir confier la surveillance à plusieurs unités indépendantes, chacune se chargeant d'une portion du réseau.

L'invention a en outre pour but de proposer un système de surveillance, plus particulièrement de surveillance de défaillances matérielles, d'un réseau d'interconnexion capable de suivre indépendamment plusieurs ensembles de ports du réseau d'interconnexion.

### [Brève description de l'invention]

A cet effet, l'invention porte sur un procédé de génération d'une requête, selon la revendication 1.

Ainsi, la présente invention permet de générer une requête pouvant être utilisée pour segmenter un réseau d'interconnexion (de type InfiniBand ou OmniPath) en plusieurs ensembles de plus petite taille. Ce procédé permet de générer à partir d'une simple instruction formelle un ensemble de plusieurs milliers de commandes d'adressage de façon à ne cibler que l'ensemble de ports souhaités. Une telle requête peut par exemple être utilisée pour mettre en place une surveillance ciblée d'une portion d'un réseau d'interconnexion via des dispositifs de surveillance distribués. En effet, de façon préférée, l'ensemble des ports définis par l'instruction en langage formel correspond à un périmètre restreint du réseau d'interconnexion.

Le procédé met en œuvre un ensemble de nombres codés sur au moins un octet. Ainsi, il n'est pas nécessaire de mettre en place ou de gérer des tables de routage plus lourdes en termes de mémoire qu'une série de nombre. Les informations permettant d'établir les liens entre des ports de commutateurs et des nœuds sont généralement stockées dans des tables de routage et/ou dans une base de données de configuration de l'infrastructure informatique. Ici, l'utilisation de chemin de routes directes permet de s'affranchir de l'utilisation de telles tables de routage. Ce procédé permet donc de définir de manière simple et compacte un ensemble de routes par lesquelles l'exploration du réseau est autorisée. Ce faisant, on peut donc définir facilement des ensembles qui pourront être surveillés par des entités logicielles dédiées. Une découverte réseau mettant en œuvre les règles définies par ce procédé peut ensuite être effectuée.

L'invention porte en outre sur un dispositif générateur de requête selon la revendication 6.

Avantageusement, le dispositif générateur de requête selon l'invention est apte à recevoir l'instruction depuis un dispositif client et à envoyer la requête à un système de surveillance d'un réseau d'interconnexion.

L'invention porte en outre sur un système de surveillance d'un réseau d'interconnexion selon la revendication 8. Un tel système pourrait permettre de surveiller le réseau en un temps plus réduit et en nécessitant des ressources plus réduites que pour une surveillance globale du réseau par une seule unité. De plus, les avantages conférés par ce système augmentent avec la taille du réseau.

Avantageusement, le procédé de surveillance comprend en outre les étapes suivantes
- réception de valeurs de statuts matériels provenant d'une pluralité de modules de surveillance de périmètre restreint, et
- enregistrement des valeurs de statuts matériels, et
- agrégation des valeurs de statuts matériels provenant d'une pluralité de modules de surveillance.

La présente invention concerne un dispositif et un procédé permettant de segmenter un réseau d'interconnexion en plusieurs sous-ensembles de plus petite taille afin de pouvoir mettre en place des dispositifs de surveillance distribués.

Au moins un des statuts matériels est sélectionné parmi : l'état de l'alimentation électrique, les valeurs de tension au niveau de la carte, les températures internes, l'état du ventilateur, les données environnementales et opérationnelles de l'affichage et les versions du logiciel (firmware en terminologie anglo-saxonne) du commutateur.

Selon un autre aspect, l'invention porte également sur un support lisible par un ordinateur ayant un code programme stocké sur celui-ci qui, quand il est exécuté par une machine, amène la machine à effectuer le procédé de génération de requête et/ou le procédé de surveillance selon l'invention.

D'autres avantages et caractéristiques de l'invention apparaitront à la lecture de la description suivante donnée à titre d'exemple illustratif et non limitatif, en référence aux Figures annexées qui représentent :
- Figure 1, un exemple de topologie de cluster associé à un système de surveillance selon l'invention ;
- Figure 2, une représentation schématique d'un procédé de génération de requête selon l'invention ;
- Figures 3A et 3B, schématiquement une suite de transformations selon le procédé de génération selon l'invention permettant la transformation d'une instruction en langage formel désignant un ensemble de ports, en une requête comportant la commande d'adressage pour chaque port de l'ensemble de ports.
- Figure 4, une représentation schématique de certaines étapes mises en œuvre conformément à l'invention lors du traitement de l'instruction en langage formel.
- Figure 5, une représentation schématique de certaines étapes mises en œuvre conformément à l'invention lors du procédé de surveillance.

### [Description de l'invention]

Dans la suite de la description, par « texte de langage formel » ou « langage formel », on entend au sens de l'invention une donnée textuelle structurée par un modèle de données prédéfini ou organisée de manière prédéfinie. Le texte en langage formel n'est pas un code informatique mais respecte une certaine forme permettant son interprétation par le générateur de requête. La forme devant être respectée peut être librement choisie lors de la configuration du générateur de requête selon l'invention

On entend par « fichier de configuration » au sens de l'invention, un fichier comprenant les informations nécessaires à la mise en œuvre du procédé selon l'invention. Les fichiers sont accessibles aux différents modules des dispositifs et systèmes selon l'invention.

L'expression « accès à un fichier de configuration » au sens de l'invention correspond aux actions nécessaires pour accéder à un fichier sur un support de stockage local, ou en le téléchargeant ou par diffusion directe (streaming), depuis un stockage distant, via un protocole web ou un accès à une base de données. Il s'agit en général d'un chemin d'accès au fichier précédé éventuellement d'un protocole d'accès (comme http://, file://).

Les termes ou expressions « application », « logiciel », « code de programme », et « code exécutable » signifient toute expression, code ou notation, d'un ensemble d'instructions destinées à provoquer un traitement de données système pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

L'expression « interface homme-machine » au sens de l'invention correspond à tout élément permettant à un être humain de communiquer avec un ordinateur en particulier et sans être exhaustif, un clavier et des moyens permettant en réponse aux ordres entrés au clavier d'effectuer des affichages et éventuellement de sélectionner à l'aide de la souris ou d'un pavé tactile des éléments affichés sur l'écran.

Par « seuil prédéterminé maximum », on entend au sens de l'invention une valeur maximale de statuts matériels associé à chaque port, commutateur ou nœud permettant un bon fonctionnement du matériel. Par exemple, cela correspond aux limites maximales acceptables de température. Ces limites peuvent être réelles ou hypothétiques et correspondent généralement un niveau au-delà duquel des dysfonctionnements peuvent survenir et ayant pour conséquence un arrêt de fonctionnement du matériel, une baisse de la durée de vie des équipements ou bien à tout le moins des baisses de qualités de service.

Le terme « dysfonctionnement » au sens de l'invention correspond à la survenue d'un incident matériel ou d'une congestion sur le réseau d'interconnexion.

Dans la suite de la description, les mêmes références sont utilisées pour désigner les mêmes éléments.

Généralement, dans le cadre de la mise en place d'un réseau d'interconnexion, au moment de l'initialisation, un gestionnaire réseau 800 pour la gestion du réseau d'interconnexion commence une phase de découverte où il réalise, via un nœud d'administration 31, un balayage du réseau d'interconnexion afin de découvrir tous les commutateurs et les nœuds. Ensuite, le module de gestion de réseau procède à l'affectation d'identifiant par exemple de type LID ou GID, à la configuration des commutateurs, aux calculs d'un tableau de routage et à la configuration des ports. À ce stade, un réseau d'interconnexion 1 est prêt et prêt à l'emploi. Une fois que le réseau est configuré, le gestionnaire réseau peut surveiller tout changement sur le réseau (e.g. un périphérique est ajouté ou un lien est supprimé). Les nœuds sont reliés les uns aux autres par des commutateurs (appelés *switch* en terminologie anglo-saxonne), par exemple de façon hiérarchique.

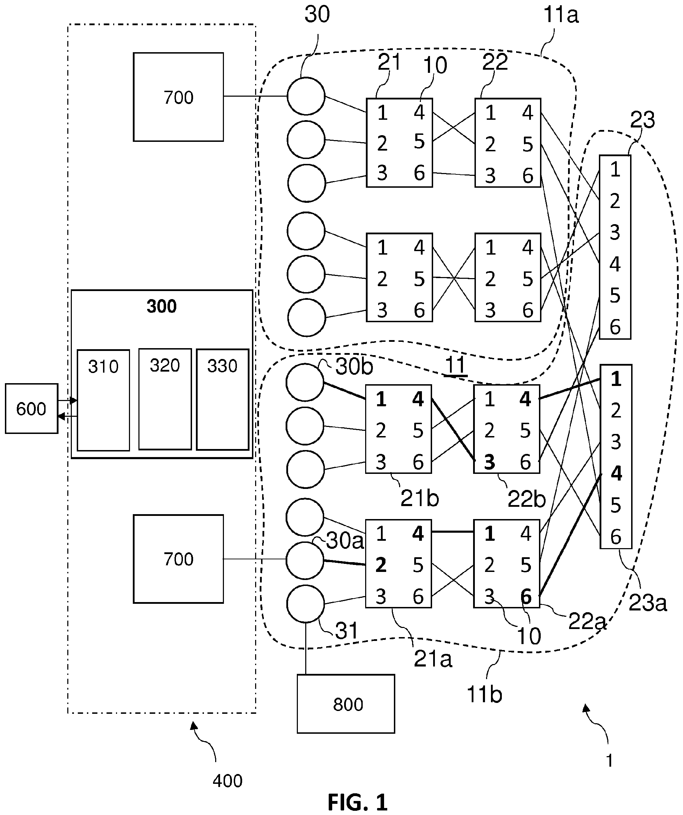

Dans l'exemple illustré sur la **figure 1****,** le réseau d'interconnexion 1 comprend ici un ensemble de nœuds référencés 30 dont un nœud d'administration 31, ainsi que les commutateurs 21, 22, 23. Chaque commutateur a ici six ports bidirectionnels numérotés 1 à 6. les nœuds 30 sont connectés à des commutateurs 21 de premier niveau qui sont eux-mêmes reliés à des commutateurs 22 de deuxième niveau qui sont à leur tour reliés à des commutateurs 23 de troisième niveau. Les commutateurs 20, c'est-à-dire 21, 22 et 23, routent des messages de leurs sources vers leurs destinations notamment selon des tables de routages programmées lors de l'initialisation du réseau d'interconnexion. A ces fins et comme représenté dans la figure 1, un port 10 est généralement associé, dans chaque commutateur 20, à une ou plusieurs destinations.

Les commutateurs 21 sont chacun connectés à trois nœuds différents. Les commutateurs 21 sont en outre connectés aux commutateurs 22. Chaque nœud est donc ici connecté à chacun des autres nœuds via au plus cinq commutateurs. A titre d'illustration, le nœud 30a est connecté au nœud 30b via les commutateurs 21a, 22a, 23a, 22b et 21b. Plus précisément, le port de sortie 1 du nœud 30a est connecté au port 2 du commutateur 21a dont le port 4 est connecté au port 1 du commutateur 22a dont le port 6 est connecté au port 4 du commutateur 23a dont le port 1 est connecté au port 4 du commutateur 22b dont le port 3 est connecté au port 4 du commutateur 21b dont le port 1 est connecté au port d'entrée du nœud 30b. Un exemple de commande d'adressage selon les routes directes serait dans ce cas une commande de type :
- D 0 1 4 6 1 3 1

Selon un mode de réalisation un client 600 peut accéder au générateur de requête 300. Par exemple, le générateur de commande d'adressage 300 peut être mis en œuvre en tant que "front-end" auquel on peut accéder par clients pour générer des requêtes à partir d'entrées de texte en langage formel. Dans l'exemple représenté sur la Fig. 1, un client 600 accède au générateur de commande d'adressage 300. Par exemple, le client peut exécuter une application cliente qui est configurée pour communiquer avec le générateur de requêtes 300. L'application cliente peut être un navigateur ou une autre application de communication basée sur le client. En réponse à l'accès par le client 600, le générateur de requêtes 300 peut générer une interface utilisateur qui peut être envoyée au client 600.

En outre, le réseau d'interconnexion 1 représenté en figure 1 est associé à deux modules de surveillance 700 chacun étant en charge d'une portion du réseau d'interconnexion. Lesdites portions 11a, 11b du réseau d'interconnexion étant constituée d'un ensemble 11 de ports.

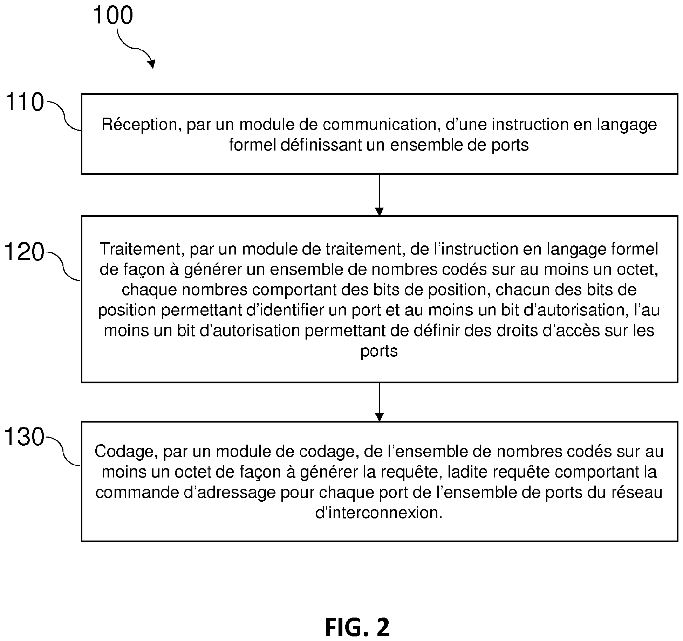

La **figure 2** est un organigramme illustrant un exemple de procédé de génération de requêtes selon l'invention. Ce procédé permet la génération d'une requête 231 comportant une commande d'adressage 232 pour chacun des ports 10 définis par une instruction 211 en langage formel. La requête peut être plus particulièrement une requête en langage informatique et de façon préférée c'est une requête comportant une pluralité de commandes de routes directes 232.

Comme présenté en figure 2, le procédé comporte une étape de **réception 110 d'une instruction 211 en langage formel définissant un ensemble 11 de ports.**

L'instruction 211 en langage formel définit un ensemble 11 de ports d'un réseau d'interconnexion. Cet ensemble 11 de ports d'un réseau d'interconnexion peut comprendre plusieurs milliers de ports. De façon préférée, l'ensemble de ports défini par l'instruction en langage formel correspond à un périmètre restreint, ou portion, du réseau d'interconnexion. Ces ensembles de ports sont représentés sur la figure 1 par les ensembles 11a et 11b où chaque ensemble comporte une pluralité de nœuds de calcul associés à une pluralité de commutateurs 20 comportant de nombreux ports. Ainsi, les nœuds de calcul 30 appartenant à deux ensembles différents sont aptes à communiquer entre eux contrairement à des ports comportant des clés de partitions différentes ou étant gérés par des gestionnaires de réseau différents.

Comme mentionné précédemment, cette instruction est reçue par un module de communication 310. Le procédé 100 peut commencer dans un état où un utilisateur, utilisant un périphérique client, a accédé au dispositif de génération de requête 300 selon l'invention. Le dispositif 300 peut proposer une interface utilisateur sur le périphérique client 600. En conséquence, l'utilisateur est en mesure d'entrer l'instruction en langage formel dans une interface utilisateur. Le périphérique client envoie l'instruction en langage formel 211 au dispositif 300 pour le traitement et la génération de requêtes.

L'instruction 211 en langage formel comporte des nombres et des symboles. L'objectif étant que cette instruction soit rapide à générer par un utilisateur et qu'elle comporte toutes les informations pour permettre au dispositif de génération de requête 300 de générer les potentielles milliers de commandes d'adressage en routes directes permettant d'atteindre l'ensemble des ports souhaités.

Le langage formel utilise les conventions suivantes :
- Opérateur '[' : Début de liste de ports à surveiller,
- Opérateur ']' : Fin de liste de ports à surveiller,
- Opérateur '(' : Début de liste de ports à traverser sans surveiller,
- Opérateur ')' : Fin de liste de ports à traverser sans surveiller,
- Opérateur '-' : Spécifie un intervalle, et
- Opérateur ',' : Concaténation.

Les conventions d'interprétation des symboles présentées ci-dessus le sont à titre d'exemple seulement et tout en restant dans le cadre de l'invention certains symboles pourraient être modifiés et des symboles ayant de nouvelle fonctions pourraient également être ajoutés. Les symboles peuvent également correspondre à des opérateurs logiques.

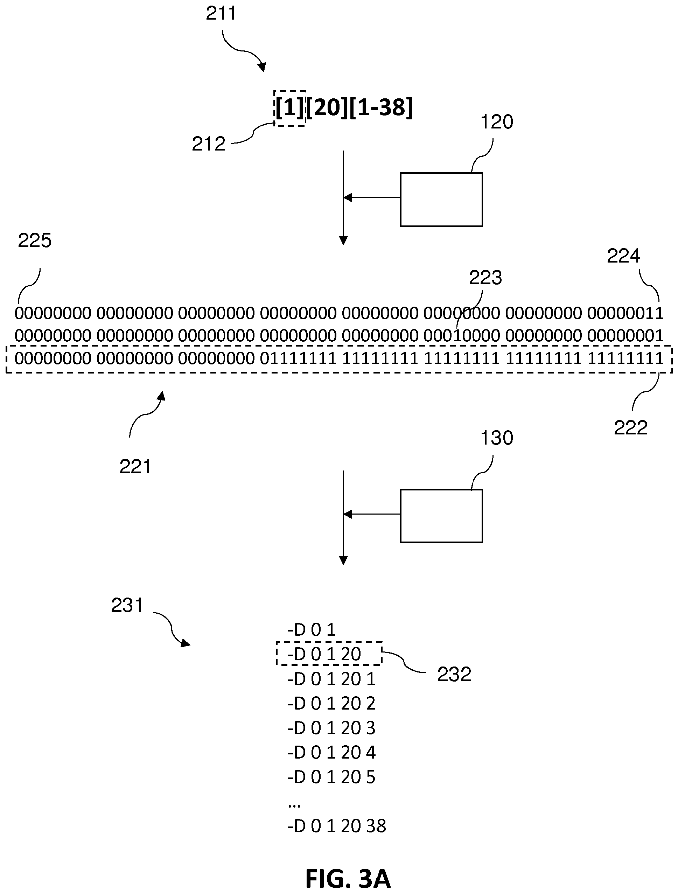

La figure 3A présente par exemple une instruction en langage formel telle que :
[1][20][1-38]

Une telle instruction en langage formel a été écrite par l'utilisateur pour décrire le comportement suivant :
- [1] : Les paquets sortent du port #1 en le surveillant (collecte de données pour ce port). Ils arrivent maintenant dans un commutateur 21.
- [20] : Les paquets sont autorisés à traverser seulement le port 20 et à collecter des données sur celui-ci. Aucun paquet n'est autorisé à sortir par des ports autres que le port 20. Les paquets autorisés à traverser atteignent un ensemble de commutateurs 22.
- [1-38] : Les paquets sont autorisés à traverser l'ensemble de commutateurs 22 à travers les ports 1 à 38 et à collecter des données sur ces derniers. Avec [1-38] on a donc 38 ports théoriques possibles notamment il est possible d'avoir sur le commutateur un nombre inférieur de ports ayant une existence physique

Pour des raisons de clarté et de concision, le port virtuel #0 des implémentations de chemin de routes directes des protocoles InfiniBand et OmniPath peut ne pas apparaitre pas dans l'instruction en langage formel.

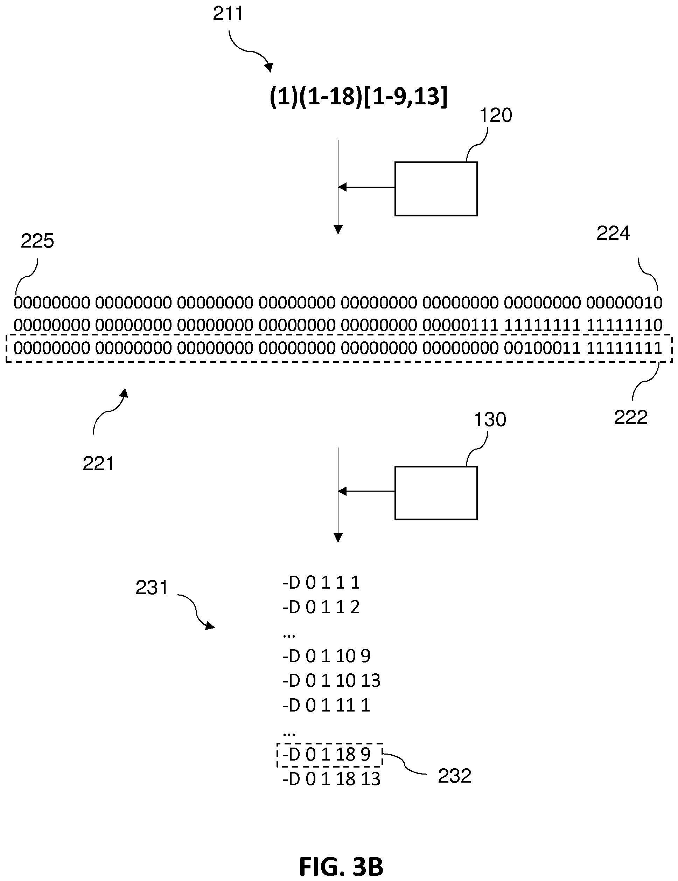

La figure 3B présente un autre exemple d'instruction en langage forme telle que :
(1)(1-18)[1-9,13]

Une telle instruction en langage formel a été écrite par l'utilisateur pour décrire le comportement suivant :
- (1) : Les paquets sortent du port #1 sans le surveiller (aucune donnée n'est collectée pour ce port). Ils arrivent maintenant dans un commutateur 21.
- (1-18) : Les paquets sont autorisés à traverser les ports 1 à 18 du commutateur S, aucune donnée n'étant collectée sur ces derniers. Aucun paquet n'est autorisé à sortir par des ports non listés dans cet intervalle. Les paquets autorisés à traverser atteignent un ensemble de commutateurs 22.
- [1-9,13] : Les paquets sont autorisés à traverser l'ensemble de commutateurs 22 à travers les ports 1 à 9 et 13 et à collecter des données sur ces derniers.

Le procédé 100 selon l'invention comporte également une étape de traitement 120 **de l'instruction 211 en langage formel de façon à générer un ensemble 221 de nombres 222 codés sur au moins un octet. Cette étape est mise en œuvre par un module de traitement 320.**

Comme cela est présenté en figure 3A, chacun des nombres 222 comporte des bits de position 223 permettent d'identifier les ports. Notamment sur la figure 3A, le bit de position 223 pointé est le port #20 du deuxième nombre codé sur au moins un octet. La position d'un des bits de position dans le nombre 222 codé sur au moins un octet est indicatrice d'un numéro de port. Ainsi, une partie des bits correspond avantageusement aux numéros de ports de commutateurs. Par exemple, comme mentionné, le bit de position 223 pointé est le port #20.

En référence, aux figures 3A et 3B, le bit le plus à gauche sur le schéma est le bit #63 correspondant à un éventuel port #63 et le bit le plus à droite est le bit #0 correspondant à un bit d'autorisation. Ainsi, chaque nombre 222 comporte également au moins un bit d'autorisation 224 permettant de définir des droits d'accès sur les ports. Par exemple, sur la figure 3A le bit d'autorisation 224 pointé est le bit d'autorisation du premier nombre codé sur huit octets.. Dans cet exemple, il y a un bit d'autorisation permettant de spécifier si le port sélectionné par l'intermédiaire des bits de position doit être traversé et surveillé (valeur bit 1) ou seulement traversé (valeur bit 0).

Les nombres 222 codés sur au moins un octet peuvent être avantageusement codés sur au moins quatre octets, de préférence ils sont codés sur huit octets. Ainsi, le nombre 222 codé peut également comprendre des bits non utilisés 225. En effet, sur la figure 3A, le nombre 222 est codé sur huit octets soit 64 bits. Etant donné qu'un commutateur 20 de réseau d'interconnexion peut comprendre moins de 63 ports alors il est probable que le nombre 222 ne soit pas entièrement utilisé.

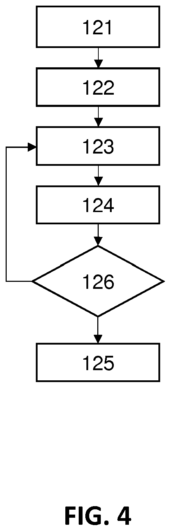

La **figure 4** représente un organigramme d'une étape de traitement selon l'invention. Dans ce cas, l'étape de traitement comporte une première étape d'analyse syntaxique 121 de l'instruction 211 en langage formel. Cela permet d'identifier les symboles pouvant être présent dans l'instruction et identifier également les plages de ports concernées.

Chaque symbole de l'instruction 211 en langage formel est notamment comparé 122 de façon séquentielle à une liste de symboles mémorisée pour segmenter l'instruction 211 en une pluralité de portions 212. Chaque portion 212 correspond avantageusement à un niveau du réseau d'interconnexion 1. La liste de symbole peut être mémorisée dans un fichier de configuration. En référence à la figure 3B, les portions identifiées seraient (1) et (1-18) et [1-9,13].

Une fois les portions identifiées, il y a transformation 123 de chaque portion 212 en un nombre 222 codé sur au moins un octet. Par exemple, la figure 3B montre trois nombres codés sur huit octets. Une fois générés, un nombre 222 codé sur au moins un octet est enregistré 124 sur une mémoire.

Dans le cadre du procédé, il peut y avoir alors une étape 126 de vérification que toutes les portions 212 ont été transformées en nombre codé sur au moins un octet. Si ce n'est pas le cas, le procédé est répété depuis l'étape 123 et la portion non transformée subit l'étape de transformation 123.

Enfin, il y a agrégation 125 des nombres 222 codés sur au moins un octet de façon à former un ensemble 221 de nombres codés sur au moins un octet.

Lors d'une étape de traitement d'une nouvelle instruction, de façon à encore accélérer la génération d'une requête, le procédé selon l'invention comporte en outre une étape de comparaison de chaque portion à des portions enregistrées sur une mémoire. Si une portion identique est identifiée dans la mémoire, alors l'étape de transformation 123 peut être remplacée par une utilisation du nombre 222 codé sur au moins un octet correspondant à ladite portion enregistrée.

Le procédé 100 selon l'invention comporte également une étape de **codage 130 de l'ensemble 211 de nombres de façon à générer une requête 231 comportant au moins une commande d'adressage. Cette étape de codage est réalisée par un module de codage 330 associé au dispositif de génération de requête selon l'invention.**

La requête 231 est de préférence une requête en langage informatique. Elle permet la génération d'une liste de chemin d'accès en route directe, ou commande d'adressage, à partir desdits nombres codés en sur au moins un octet.

La liste de chemin d'accès est générée de préférence dans un langage informatique permettant à un « système manager » d'accéder directement aux ports définis dans la l'instruction en langage formel (non informatique) réalisé par un utilisateur. De façon avantageuse, la requête comporte une commande d'adressage par port à surveiller et ladite commande d'adressage est une commande de type chemins de routes directes.

Les figures 3A et 3B présentent des exemples de telles requêtes 231. Par convention, il est admis qu'un chemin de routes directes commence toujours par l'identifiant 0. En outre, pour des raisons de clarté, il est supposé ici que chaque nœud ne comprend qu'un port d'entrée et de sortie ayant la référence 1.

Les informations permettant d'établir les liens entre des ports de commutateurs et entre des ports de commutateurs et de nœuds sont généralement stockées dans des tables de routage et/ou dans une base de données de configuration de l'infrastructure informatique. Ici, l'utilisation de chemin de routes directes permet de s'affranchir de l'utilisation de telles tables de routage.

Les différentes étapes du procédé selon l'invention peuvent être enregistrées sur un ou plusieurs fichiers de configuration auxquels un dispositif de génération de requête selon l'invention pourrait avoir accès. Le fichier ou les fichiers de configuration peuvent être codés en un grand nombre de langage de programmation. Par exemple, ils sont codés langage C.

Selon un autre aspect, l'invention porte sur un **dispositif 300 générateur de requête,** configuré pour générer une requête, à partir d'une instruction en langage formel définissant un ensemble de ports d'un réseau d'interconnexion. Le réseau d'interconnexion comporte généralement une pluralité de nœuds de calcul où chaque nœud comporte une pluralité de ports permettant de les relier entre eux et à des commutateurs. La requête générée présente la particularité de comporter une commande d'adressage 232 pour chacun des ports définis dans l'instruction en langage formel. Le générateur de requête 300 est plus particulièrement un générateur de commande d'adressage.

Comme cela est présenté en figure 1, le dispositif 300 générateur de requête comporte un module de communication 310 apte à recevoir une instruction en langage formel définissant un ensemble de ports. Le module de communication 310 est configuré pour recevoir et transmettre des informations à des systèmes distants tels que des tablettes, des téléphones, des ordinateurs ou des serveurs et est ainsi apte à permettre la communication entre le dispositif 300 et un terminal distant, dont un client 600. Le module de communication 310 permet de transmettre les données sur au moins un réseau de communication et peut comprendre une communication filaire ou sans fil. L'interaction peut impliquer un logiciel applicatif utilisé par l'opérateur pour interagir avec le système selon l'invention. Le logiciel applicatif peut comporter une interface graphique permettant de faciliter une interaction avec un opérateur. Un opérateur peut alors agir sur le terminal distant de façon à générer une instruction apte à être mise en œuvre par le dispositif 300. De même, le dispositif 300 est apte à recevoir l'instruction 211 depuis un dispositif client et à envoyer la requête 231 à un système de surveillance 400 d'un réseau d'interconnexion.

Le dispositif 300 générateur de requête comporte également un module de traitement 320 apte à traiter l'instruction 211 en langage formel de façon à générer un ensemble 221 de nombres 222 codés sur au moins un octet ainsi qu'un module de codage 330 apte à coder l'ensemble de nombres codés sur au moins un octet de façon à générer une requête comportant une commande d'adressage pour chacun des ports de l'ensemble de ports.

Ces modules 310, 320, 330 sont distincts sur la figure 1 mais l'invention peut prévoir divers types d'agencement comme par exemple un seul module cumulant l'ensemble des fonctions décrites ici. De même, ces moyens peuvent être divisés en plusieurs cartes électroniques ou bien rassemblés sur une seule carte électronique.

Lorsque l'on prête une action à un dispositif ou un module celle-ci est en fait effectuée par un microprocesseur du dispositif ou module commandé par des codes instructions enregistrés dans une mémoire. Si l'on prête une action à une application, celle-ci est en fait effectuée par un microprocesseur du dispositif dans une mémoire duquel les codes instructions correspondant à l'application sont enregistrés. Lorsqu'un dispositif ou module émet ou reçoit un message, ce message est émis ou reçu par une interface de communication. Les mémoires évoquées dans cette invention peuvent correspondre à une mémoire vive et/ou une mémoire de masse. La mémoire de masse peut- être un support tel qu'une carte mémoire, ou un disque dur hébergé par un serveur distant.

Selon un autre aspect, l'invention porte sur un **système 400 de surveillance d'un réseau d'interconnexion** comportant un dispositif générateur de requête selon l'invention ainsi que sur un procédé mettant en œuvre ce système. De façon préférée, le procédé de surveillance selon l'invention est dédié à la surveillance de défaillances matérielles. Il permet donc de suivre les informations matérielles pouvant être transmises par les ports des commutateurs du réseau d'interconnexion.

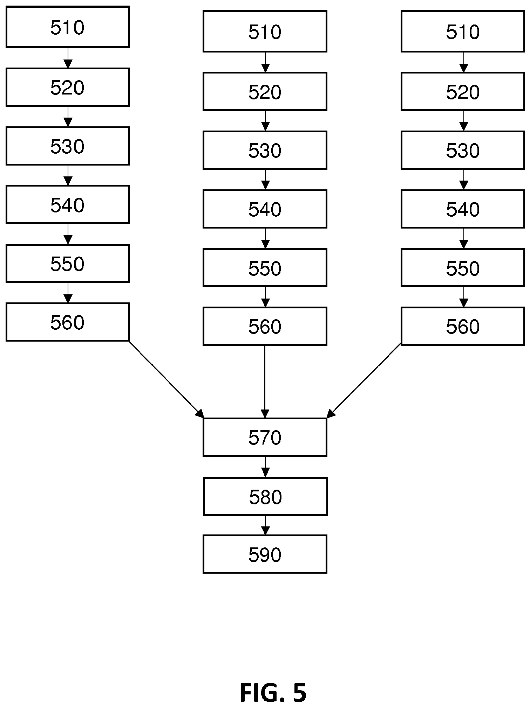

Un procédé de surveillance selon l'invention est présenté à la **figure 5****.** Il comprend les étapes suivantes :
- réception 510 d'une instruction 211 en langage formel définissant un ensemble 11 de ports correspondant à un périmètre restreint du réseau d'interconnexion,
- génération 520, à partir de l'instruction 211 en langage formel, d'une requête 231 comportant une commande d'adressage pour chacun des ports 10 définis dans l'instruction 211 en langage formel,
- transmission 530 de la requête 231 à un module de surveillance 700 de périmètre restreint apte à recevoir des statuts matériels de l'ensemble 11 de ports du périmètre restreint de la surveillance,
- requête 540 de statuts matériels par le module de surveillance 700 de périmètre restreint auprès des ports correspondant au périmètre restreint du réseau d'interconnexion,
- réceptions 550 des valeurs de statuts matériels par le module de surveillance 700, et
- enregistrement 560 des valeurs de statuts matériels par le module de surveillance 700.

De façon préférée, l'enregistrement 560 des valeurs de statuts matériels correspond à l'enregistrement des valeurs de statuts matériels ayant dépassées un seuil prédéterminé maximum. Ainsi, il n'y a pas encombrement de la mémoire avec des informations moins pertinentes.

Le procédé peut également comprendre une étape de transmission des valeurs de statuts matériels enregistrées par le module de surveillance.

Dans le mode de réalisation décrit à la figure 5, la méthode de surveillance est mise en œuvre en parallèle par trois modules de surveillance 700 de périmètre restreint. Cela permet d'alléger la charge soutenue par chacun des modules de surveillance 700 et donc d'améliorer la performance du procédé.

Lorsque plusieurs modules de surveillance de périmètre restreint sont mis en œuvre, le procédé de surveillance d'un réseau d'interconnexion selon l'invention peut comprendre en outre la réception de valeurs de statuts matériels provenant d'une pluralité de modules de surveillance de périmètre restreint. Comme mentionné précédemment, avantageusement, seules les valeurs de statuts matériels ayant dépassé un seuil prédéterminé maximum sont réceptionnées 570 et enregistrées 580.

Les valeurs de statuts matériels, de préférence celles ayant dépassé un seuil prédéterminé maximum, sont agrégées 590 de façon à obtenir une vision globale du réseau d'interconnexion. Les valeurs de statuts matériels sont avantageusement sélectionnées parmi : l'état de l'alimentation électrique, les valeurs de tension au niveau de la carte, les températures internes (puces, contrôleur, ventilateur, carte...), l'état du ventilateur, les données environnementales et opérationnelles de l'affichage, les versions du logiciel du commutateur, les erreurs de câblage, des niveaux de congestion, les erreurs d'identifiants (LID...), les erreurs de connexion, les erreurs d'alimentation, les alertes de débit.

Ainsi, les procédés et matériel selon l'invention permettent de segmenter rapidement un ensemble de ports d'un réseau d'interconnexion de façon à par exemple à mettre en place une surveillance par périmètres dudit réseau d'interconnexion. En outre, le procédé de surveillance ainsi mis au point présente des performances améliorées par rapport aux systèmes classiques de tables de routage ou d'utilisation de clés de partition.

Tous ces avantages contribuent donc à réduire les temps de traitement de la surveillance, notamment matérielle, d'un réseau d'interconnexion et également à réduire les volumes de données gérés.

## Revendications

1. Procédé de génération d'une requête (231) ciblant un ensemble (11) de ports (10) dans un réseau d'interconnexion (1) pour la surveillance ciblée dudit ensemble (11) de ports (10), ledit procédé comportant les étapes suivantes :
- réception (110), par un module de communication (310), d'une instruction (211) en langage formel définissant ledit ensemble (11) de ports (10), ladite instruction (211) en langage formel comportant :
∘ une pluralité de nombres correspondant à des numéros de ports (10) du réseau d'interconnexion (1) et,
∘ une pluralité de symboles choisis parmi un ensemble de symboles comprenant :
▪ au moins un premier symbole, indiquant une liste de numéros de ports (10) à surveiller, et
▪ au moins un deuxième symbole, indiquant une liste de numéros de ports (10) à traverser sans surveiller,
- traitement (120), par un module de traitement (320), de l'instruction (211) en langage formel de façon à générer un ensemble (221) de nombres (222), associé à l'ensemble (11) de ports (10), l'étape de traitement (120) comportant les sous étapes suivantes :
∘ analyse syntaxique (121) de l'instruction (211) en langage formel,
∘ comparaison (122) de chaque symbole de l'instruction en langage formel de façon séquentielle à une liste mémorisée pour segmenter l'instruction (211) en une pluralité de portions (212), chaque portion (212) correspondant à un niveau du réseau d'interconnexion (1),
∘ transformation (123) de chaque portion (212) en un nombre (222) codé sur au moins un octet, lesdits nombres (222) comportant au moins un bit d'autorisation (224) et des bits de position (223), chacun des bits de position (223) permettant d'identifier un port (10), la position d'un des bits de position (23) dans le nombre (222) étant indicatrice d'un numéro de port (10), l'au moins un bit d'autorisation (224) étant configuré pour définir des droits d'accès sur les ports en spécifiant si le port sélectionné par l'intermédiaire des bits de position (223) doit être traversé et surveillé ou seulement traversé, et
∘ enregistrement (124) de chacun des nombres (222) codés sur au moins un octet, et
- codage (130), par un module de codage (330), de l'ensemble (221) de nombres (222) de façon à générer la requête (231), ladite requête (231) comportant une commande d'adressage (232) pour chaque port (10) de l'ensemble (11) de ports du réseau d'interconnexion (1) de manière à définir une liste de chemins de routes directes dans le réseau d'interconnexion (1) qui autorise l'accès direct à l'ensemble (11) de ports définis dans l'instruction (211) en langage formel.

2. Procédé de génération selon la revendication 1, **caractérisé en ce que** le réseau d'interconnexion (1) comporte une pluralité de niveaux et **en ce que** l'ensemble (221) de nombres (222) comporte, pour chaque niveau du réseau d'interconnexion (1), au moins un nombre (222) codé sur au moins un octet.

3. Procédé de génération selon l'une des revendications 1 ou 2, **caractérisé en ce que** les nombres (222) codés sur au moins un octet, sont des nombres (222) codés sur huit octets.

4. Procédé de génération selon l'une quelconque des revendications 1 à 3, **caractérisé en ce que** l'ensemble (221) de nombres comporte entre deux et seize nombres (222) codés sur au moins un octet.

5. Procédé de génération selon l'une quelconque des revendications 1 à 4, **caractérisé en ce que** l'étape de traitement (120), comporte la sous étape suivante :
- agrégation (125) des nombres (222) codés sur au moins un octet de façon à former un ensemble (221) de nombres codés sur au moins un octet.

6. Dispositif générateur de requête (300) configuré pour générer une requête (231) ciblant un ensemble (11) de ports (10) dans un réseau d'interconnexion (1) pour la surveillance ciblée dudit ensemble (11) de ports (10), ledit dispositif (300) comportant :
- un module de communication (310) apte à recevoir une instruction en langage formel définissant ledit ensemble (11) de ports (10), ladite instruction (211) en langage formel comportant :
∘ une pluralité de nombres correspondant à des numéros de ports (10) du réseau d'interconnexion (1) et,
∘ une pluralité de symboles choisis parmi un ensemble de symboles comprenant :
▪ au moins un premier symbole, indiquant une liste de numéros de ports (10) à surveiller, et
▪ au moins un deuxième symbole, indiquant une liste de numéros de ports (10) à traverser sans surveiller,
- un module de traitement (320) apte à traiter l'instruction (211) en langage formel de façon à générer un ensemble (221) de nombres (222), associé à l'ensemble (11) de ports, ledit module de traitement (320) étant configuré pour :
∘ analyser de manière syntaxique l'instruction (211) en langage formel,
∘ comparer chaque symbole de l'instruction en langage formel de façon séquentielle à une liste mémorisée pour segmenter l'instruction (211) en une pluralité de portions (212), chaque portion (212) correspondant à un niveau du réseau d'interconnexion (1),
∘ transformer chaque portion (212) en un nombre (222) codé sur au moins un octet, lesdits nombres (222) comportant au moins un bit d'autorisation (24) et des bits de position (223), chacun des bits de position (223) permettant d'identifier un port (10), la position d'un des bits de position (23) étant indicatrice d'un numéro de port (10), l'au moins un bit d'autorisation (224) étant configuré pour définir des droits d'accès sur les ports en spécifiant si le port sélectionné par l'intermédiaire des bits de position (223) doit être traversé et surveillé ou seulement traversé, et
∘ enregistrer chacun des nombres (222) codés sur au moins un octet, et
- un module de codage (330) apte à coder l'ensemble (221) de nombres codés (222) de façon à générer une requête (231), ladite requête (231) comportant une commande d'adressage (232) pour chaque port (10) de l'ensemble (11) de ports du réseau d'interconnexion (1) de manière à définir une liste de chemins de routes directes dans le réseau d'interconnexion (1) qui autorise l'accès direct à l'ensemble (11) de ports définis dans l'instruction (211) en langage formel.

7. Dispositif selon la revendication 6, **caractérisé en ce qu'**il est apte à recevoir l'instruction (211) depuis un dispositif client (600) et à envoyer la requête (231) à un système (400) de surveillance d'un réseau d'interconnexion (1).

8. Système (400) de surveillance des défaillances matérielles d'un ensemble (11) de ports (10) dans un réseau d'interconnexion (1) comportant :
- un dispositif (300) générateur d'une requête (231) ciblant ledit ensemble (11) de ports (10) selon l'une des revendications 6 et 7,
- un dispositif de transmission (530) de la requête (231) à un module de surveillance (700) de périmètre restreint apte à recevoir des valeurs de statuts matériels de l'ensemble (11) de ports du périmètre restreint du réseau d'interconnexion (1), au moins l'une des valeurs de statuts matériels étant sélectionnée parmi : l'état de l'alimentation électrique, les valeurs de tension au niveau de la carte, les températures internes, l'état du ventilateur, les données environnementales et opérationnelles de l'affichage, les versions du logiciel du commutateur, les erreurs de câblage, des niveaux de congestion, les erreurs d'identifiants, les erreurs de connexion, les erreurs d'alimentation et les alertes de débit, le module de surveillance (700) étant configuré pour :
- requêter (540) des valeurs de statuts matériels auprès des ports correspondant au périmètre restreint du réseau d'interconnexion (1),
- recevoir (550) des valeurs de statuts matériels, et
- enregistrer (560) des valeurs de statuts matériels.

9. Système (400) de surveillance d'un réseau d'interconnexion selon la revendication 8 configuré en outre pour :
- recevoir (570), par chacun parmi une pluralité de modules de surveillance de périmètre restreint, des valeurs de statuts matériels associées,
- enregistrer (580), par chacun parmi une pluralité de modules de surveillance de périmètre restreint, des valeurs de statuts matériels associées, et
- agréger (590) des valeurs de statuts matériels provenant d'une pluralité de modules de surveillance.

## Patentansprüche

1. Erzeugungsverfahren für eine Anfrage (231), die auf einen Satz (11) von Ports (10) in einem Verbindungsnetz (1) zur gezielten Überwachung des Satzes (11) von Ports (10) abzielt, wobei das Verfahren die folgenden Schritte umfasst:
- Empfangen (110) einer formalsprachlichen Anweisung (211), die den Satz (11) von Ports (10) definiert, durch ein Kommunikationsmodul (310), wobei die formalsprachliche Anweisung (211) umfasst:
∘ eine Vielzahl von Zahlen, die den Nummern von Ports (10) des Verbindungsnetzes (1) entsprechen, und
∘ eine Vielzahl von Symbolen, die aus einem Satz von Symbolen ausgewählt sind, der umfasst:
▪ mindestens ein erstes Symbol, das eine Liste von Nummern von zu überwachenden Ports (10) angibt, und
▪ mindestens ein zweites Symbol, das eine Liste von Nummern von Ports (10) angibt, die ohne Überwachung durchlaufen werden soll,
- Verarbeiten (120) der formalsprachlichen Anweisung (211) durch ein Verarbeitungsmodul (320), um einen Satz (221) von Zahlen (222) zu erzeugen, der dem Satz (11) von Ports (10) zugeordnet ist, wobei der Verarbeitungsschritt (120) die folgenden Teilschritte umfasst:
∘ syntaktisches Analysieren (121) der formalsprachlichen Anweisung (211),
∘ Vergleichen (122) jedes Symbols der formalsprachlichen Anweisung sequentiell mit einer gespeicherten Liste, um die Anweisung (211) in eine Vielzahl von Abschnitten (212) zu segmentieren, wobei jeder Abschnitt (212) einer Ebene des Verbindungsnetzes (1) entspricht,
∘ Umwandeln (123) jedes Abschnitts (212) in eine Zahl (222), die in mindestens einem Byte codiert ist, wobei die Zahlen (222) mindestens ein Freigabebit (224) und Positionsbits (223) umfassen, wobei jedes der Positionsbits (223) einen Port (10) identifizieren kann, wobei die Position eines der Positionsbits (23) in der Zahl (222) eine Nummer des Ports (10) anzeigt, wobei das mindestens eine Freigabebit (224) so konfiguriert ist, dass es Zugriffsrechte auf die Ports definiert, indem es angibt, ob der über die Positionsbits (223) ausgewählte Port durchlaufen und überwacht oder nur durchlaufen werden soll, und
∘ Speichern (124) jeder der Zahlen (222), die in mindestens einem Byte codiert sind, und
- Codieren (130), durch ein Codiermodul (330), des Satzes (221) von Zahlen (222), um die Anfrage (231) zu erzeugen, wobei die Anfrage (231) einen Adressierungsbefehl (232) für jeden Port (10) des Satzes (11) von Ports des Verbindungsnetzes (1) umfasst, um eine Liste von direkten Routenpfaden in dem Verbindungsnetz (1) zu definieren, die einen direkten Zugriff auf den Satz (11) von Ports freigibt, die in der formalsprachlichen Anweisung (211) definiert sind.

2. Erzeugungsverfahren nach Anspruch 1, **dadurch gekennzeichnet, dass** das Verbindungsnetz (1) eine Vielzahl von Ebenen umfasst und dass der Satz (221) von Zahlen (222) für jede Ebene des Verbindungsnetzes (1) mindestens eine Zahl (222) umfasst, die auf mindestens einem Byte codiert ist.

3. Erzeugungsverfahren nach einem der Ansprüche 1 oder 2, **dadurch gekennzeichnet, dass** die Zahlen (222), die auf mindestens einem Byte codiert sind, Zahlen (222) sind, die auf acht Byte codiert sind.

4. Erzeugungsverfahren nach einem der Ansprüche 1 bis 3, **dadurch gekennzeichnet, dass** der Satz (221) von Zahlen zwischen zwei und sechzehn Zahlen (222) umfasst, die auf mindestens einem Byte codiert sind.

5. Erzeugungsverfahren nach einem der Ansprüche 1 bis 4, **dadurch gekennzeichnet, dass** der Verarbeitungsschritt (120), den folgenden Unterschritt umfasst:
- Aggregieren (125) der Zahlen (222), die auf mindestens einem Byte codiert sind, um einen Satz (221) von Zahlen zu bilden, die auf mindestens einem Byte codiert sind.

6. Erzeugungsvorrichtung für eine Anfrage (300), die so konfiguriert ist, dass sie eine Anfrage (231) erzeugt, die auf einen Satz (11) von Ports (10) in einem Verbindungsnetz (1) zur gezielten Überwachung des Satzes (11) von Ports (10) abzielt, wobei die Vorrichtung (300) umfasst:
- ein Kommunikationsmodul (310), das eine formalsprachliche Anweisung empfangen kann, die den Satz (11) von Ports (10) definiert, wobei die formalsprachliche Anweisung (211) umfasst:
∘ eine Vielzahl von Zahlen, die den Nummern von Ports (10) des Verbindungsnetzes (1) entsprechen, und
∘ eine Vielzahl von Symbolen, die aus einem Satz von Symbolen ausgewählt sind, der umfasst:
▪ mindestens ein erstes Symbol, das eine Liste von Nummern von zu überwachenden Ports (10) angibt, und
▪ mindestens ein zweites Symbol, das eine Liste von Nummern von Ports (10) angibt, die ohne Überwachung durchlaufen werden sollen,
- ein Verarbeitungsmodul (320), das die formalsprachliche Anweisung (211) verarbeiten kann, um einen Satz (221) von Zahlen (222) zu erzeugen, der dem Satz (11) von Ports zugeordnet ist, wobei das Verarbeitungsmodul (320) so konfiguriert ist, dass es:
∘ die formalsprachliche Anweisung (211) syntaktisch analysiert,
∘ jedes Symbol der formalsprachlichen Anweisung sequentiell mit einer gespeicherten Liste vergleicht, um die Anweisung (211) in eine Vielzahl von Abschnitten (212) zu segmentieren, wobei jeder Abschnitt (212) einer Ebene des Verbindungsnetzes (1) entspricht,
∘ Umwandeln jedes Abschnitts (212) in eine Zahl (222), die in mindestens einem Byte codiert ist, wobei die Zahlen (222) mindestens ein Freigabebit (224) und Positionsbits (223) umfassen, wobei jedes der Positionsbits (223) einen Port (10) identifizieren kann, wobei die Position eines der Positionsbits (223) eine Nummer des Ports (10) anzeigt, wobei das mindestens eine Freigabebit (224) so konfiguriert ist, dass es Zugriffsrechte auf die Ports definiert, indem es angibt, ob der über die Positionsbits (223) ausgewählte Port durchlaufen und überwacht oder nur durchlaufen werden soll, und
∘ Speichern jeder der Zahlen (222), die in mindestens einem Byte codiert sind, und
- ein Codiermodul (330), das den Satz (221) der codierten Zahlen (222) codieren kann, um eine Anfrage (231) zu erzeugen, wobei die Anfrage (231) einen Adressierungsbefehl (232) für jeden Port (10) des Satzes (11) von Ports des Verbindungsnetzes (1) umfasst, um eine Liste von direkten Routenpfaden im Verbindungsnetz (1) zu definieren, die den direkten Zugriff auf den Satz (11) von Ports freigibt, die in der formalsprachlichen Anweisung (211) definiert sind.

7. Vorrichtung nach Anspruch 6, **dadurch gekennzeichnet, dass** sie die Anweisung (211) von einer Client-Vorrichtung (600) empfangen und die Anfrage (231) an ein System (400) zur Überwachung eines Verbindungsnetzes (1) senden kann.

8. System (400) zur Überwachung von Hardware-Ausfällen eines Satzes (11) von Ports (10) in einem Verbindungsnetz (1), umfassend:
- eine Erzeugungsvorrichtung (300) für eine Anfrage (231), die auf den Satz (11) von Ports (10) nach einem der Ansprüche 6 und 7 abzielt,
- eine Vorrichtung (530) zur Übermittlung der Anfrage (231) an ein Überwachungsmodul (700) für den eingeschränkten Umfang, das geeignet ist, Hardware-Statuswerte des Satzes (11) von Ports des eingeschränkten Umfangs des Verbindungsnetzes (1) zu empfangen, wobei mindestens einer der Hardware-Statuswerte ausgewählt ist aus: Stromversorgungsstatus, Spannungswerte auf Kartenebene, interne Temperaturen, Lüfterstatus, Umgebungs- und Betriebsdaten der Anzeige, Versionen der Switch-Software, Verdrahtungsfehler, Überlastungsniveaus, Identifikationsfehler, Verbindungsfehler, Stromversorgungsfehler und Leistungswarnungen, wobei das Überwachungsmodul (700) so konfiguriert ist, dass es:
- Hardware-Statuswerte von den Ports abfragt (540), die dem eingeschränkten Umfang des Verbindungsnetzes (1) entsprechen,
- Hardware-Statuswerte empfängt (550) und
- Hardware-Statuswerte speichert (560).

9. System (400) zur Überwachung eines Verbindungsnetzes nach Anspruch 8, das ferner so konfiguriert ist, dass es:
- durch jedes einer Vielzahl von Überwachungsmodulen mit eingeschränktem Umfang zugehörige Hardware-Statuswerte empfängt (570),
- durch jedes einer Vielzahl von Überwachungsmodulen mit eingeschränktem Umfang zugehörige Hardware-Statuswerte speichert (580),
- Hardware-Statuswerte aus einer Vielzahl von Überwachungsmodulen aggregiert (590).

## Claims

1. A method for generating a request (231) targeting a set (11) of ports (10) in an interconnection network (1) for the targeted monitoring of said set (11) of ports (10), said method comprising the following steps:
- receiving (110), by a communication module (310), a formal language instruction (211) defining said set (11) of ports (10), said formal language instruction (211) comprising:
∘ a plurality of numbers corresponding to port numbers (10) of the interconnection network (1) and,
∘ a plurality of symbols selected from a set of symbols comprising:
▪ at least a first symbol, indicating a list of port numbers (10) to be monitored, and
▪ at least a second symbol, indicating a list of port numbers (10) to pass through without monitoring,
- processing (120), by a processing module (320), the formal language instruction (211) so as to generate a set (221) of numbers (222), associated with the set (11) of ports (10), the processing step (120) comprising the following substeps:
∘ parsing (121) the formal language instruction (211),
∘ comparing (122) each symbol of the formal language instruction sequentially with a stored list in order to segment the instruction (211) into a plurality of portions (212), each portion (212) corresponding to a level of the interconnection network (1),
∘ transforming (123) each portion (212) into a number (222) encoded on at least one byte, said numbers (222) comprising at least one authorization bit (224) and position bits (223), each of the position bits (223) making it possible to identify a port (10), the position of one of the position bits (23) in the number (222) indicating a port number (10), the at least one authorization bit (224) being configured to define access rights to the ports by specifying whether the port selected by means of the position bits (223) must be passed through and
monitored or only passed through, and
∘ saving (124) each of the numbers (222) encoded on at least one byte, and
- encoding (130), by an encoding module (330), the set (221) of numbers (222) so as to generate the request (231), said request (231) comprising an addressing command (232) for each port (10) of the set (11) of ports of the interconnection network (1) so as to define a list of direct route paths in the interconnection network (1) which authorizes direct access to the set (11) of ports defined in the formal language instruction (211).

2. The generating method according to claim 1, **characterized in that** the interconnection network (1) comprises a plurality of levels and **in that** the set (221) of numbers (222) comprises, for each level of the interconnection network (1), at least one number (222) encoded on at least one byte.

3. The generating method according to one of claims 1 or 2,
**characterized in that** the numbers (222) encoded on at least one byte, are numbers (222) encoded on eight bytes.

4. The generating method according to any of claims 1 to 3,
**characterized in that** the set (221) of numbers comprises between two and sixteen numbers (222) encoded on at least one byte.

5. The generating method according to any one of claims 1 to 4, **characterized in that** the processing step (120), comprises the following substep:
- aggregating (125) the numbers (222) encoded on at least one byte so as to form a set (221) of numbers encoded on at least one byte.

6. A request-generating device (300) configured to generate a request (231) targeting a set (11) of ports (10) in an interconnection network (1) for the targeted monitoring of said set (11) of ports (10), said device (300) comprising:
- a communication module (310) able to receive a formal language instruction defining said set (11) of ports (10), said formal language instruction (211) comprising:
∘ a plurality of numbers corresponding to port numbers (10) of the interconnection network (1) and,
∘ a plurality of symbols selected from a set of symbols comprising:
▪ at least a first symbol, indicating a list of port numbers (10) to be monitored, and
▪ at least a second symbol, indicating a list of port numbers (10) to pass through without monitoring,
- a processing module (320) able to process the formal language instruction (211) so as to generate a set (221) of numbers (222), associated with the set (11) of ports, said processing module (320) being configured to:
∘ syntactically parse the formal language instruction (211),
∘ compare each symbol of the formal language instruction sequentially with a stored list in order to segment the instruction (211) into a plurality of portions (212), each portion (212) corresponding to a level of the interconnection network (1),
∘ transform each portion (212) into a number (222) encoded on at least one byte, said numbers (222) comprising at least one authorization bit (24) and position bits (223), each of the position bits (223) making it possible to identify a port (10), the position of one of the position bits (23) indicating a port number (10), the at least one authorization bit (224) being configured to define access rights to the ports by specifying whether the port selected by means of the position bits (223) must be passed through and monitored or only passed through, and
∘ save each of the numbers (222) encoded on at least one byte, and
- an encoding module (330) able to encode the set (221) of encoded numbers (222) so as to generate a request (231), said request (231) comprising an addressing command (232) for each port (10) of the set (11) of ports of the interconnection network (1) so as to define a list of direct route paths in the interconnection network (1) which authorizes direct access to the set (11) of ports defined in the formal language instruction (211).

7. The device according to claim 6, **characterized in that** it is able to receive the instruction (211) from a client device (600) and to send the request (231) to a system (400) for monitoring an interconnection network (1).

8. A system (400) for monitoring hardware failures for a set (11) of ports (10) in an interconnection network (1) comprising:
- a device (300) for generating a request (231) targeting said set (11) of ports (10) according to one of claims 6 and 7,
- a device for transmitting (530) the request (231) to a restricted perimeter monitoring module (700) able to receive hardware status values for the set (11) of restricted perimeter ports of the interconnection network (1), at least one of the hardware status values being selected from: the status of the power supply, the voltage values at the board, the internal temperatures, the status of the fan, the environmental and operational data of the display, the versions of the switch software, the wiring errors, congestion levels, login errors, connection errors, supply errors and flow alerts, the monitoring module (700) being configured to:
- request (540) hardware status values from the ports corresponding to the restricted perimeter of the interconnection network (1),
- receive (550) hardware status values, and
- save (560) hardware status values.

9. The system (400) for monitoring an interconnection network according to claim 8 further configured to:
- receive (570), via each of a plurality of restricted perimeter monitoring modules, associated hardware status values,
- save (580), via each of a plurality of restricted perimeter monitoring modules, associated hardware status values, and
- aggregate (590) hardware status values originating from a plurality of monitoring modules.
